# EUROPÄISCHE PATENTSCHRIFT

(11) **EP 1 078 900 B1**
(45) Veröffentlichungstag und Bekanntmachung des Hinweises auf die Patenterteilung: **07.04.2004**
(21) Anmeldenummer: 00115520.9
(22) Anmeldetag: 19.07.2000
(51) Int. Cl.: C04B 33/13, C04B 35/634

(54) **Verfahren zur Herstellung eines Körpers aus Porzellan**
Method of production of a porcelain body
Méthode de production d'un article en porcelaine

(30) Priorität: 26.08.1999 DE 19940653
(43) Veröffentlichungstag der Anmeldung: 28.02.2001
(73) Patentinhaber: Koppe, Franz, D-92676 Eschenbach Oberpfalz (DE)
(72) Erfinder: Koppe, Franz, 92626 Eschenbach (DE); Weber, Gerald, 91522 Ansbach (DE)
(74) Vertreter: Moldenhauer, Herbert

(56) Entgegenhaltungen:
- DD-A- 90 982
- FR-A- 2 530 616
- US-A- 4 000 110

## Beschreibung

Die Erfindung betrifft ein Verfahren zur Herstellung eines Körpers aus Porzellan, bei dem ein Gemisch zumindest aus Ton, Feldspat und Quarz in die Gestalt einer wäßrigen Masse überführt, anschließend fertig geformt und durch einen Brennprozeß bleibend verfestigt wird.

Keramische Materialien werden benutzt, um Gegenstände herzustellen, die eine hohe thermische und chemische Beständigkeit besitzen. Auch ihre Isolationseigenschaften gegenüber elektrischen Strömen sind von Interesse. Bei den bekannten Verfahren zur Herstellung keramischer Gegenstände wird vorzugsweise aus der keramischen Masse ein wäßriger Gießschlicker hergestellt, der in die Gestalt eines sogenannten Grünkörpers geformt und getrocknet wird. Aus dem Grünkörper wird durch einen keramischen Brennprozeß nachfolgend ein sogenannter Weißkörper erhalten. Weißkörper haben eine hohe Festigkeit. Sie können je nach Zusammensetzung der keramischen Masse als Geschirr, Hochleistungskeramiken für Schneidzwecke, Spinndüsen, Filter, Dichtungen oder in der Elektrotechnik Anwendung finden. Das Verfahren ist aufwendig in der Anwendung.

Aus den Dokumenten DE-A 196 154 00, EP-A 6 354 64, EP-A 650 946 und JP-A 60/10956 sind keramische Massen bekannt, die eine wäßrige Dispersion eines polymeren Bindemittels enthalten. Die Herstellung der keramischen Masse erfolgt dann in der Weise, daß der wäßrigen Suspension eines Keramikpulvers die wäßrige Dispersion eines polymeren Bindemittels und eventuell weitere Hilfsstoffe, wie z.B. Dispergierhilfsmittel, Entschäumer und Weichmacher zugesetzt werden, welche die Gießbarkeit und die Flexibilität der Masse verbessern. Der Prozentsatz an Keramik in der Dispersion liegt je nach Einsatzgebiet und den gewünschten Eigenschaften des Keramikkörpers zwischen 30 und 85 Gew.-%.

Um sogenannte Grünfolien herzustellen, wird die vorgeschriebene Masse in möglichst konstanter Dicke durch einen definierten Gießspalt auf ein kontinuierliches Band ausgegossen und anschließend durch einen Trockentunnel geführt. Die Dispersion wird dadurch soweit eingedickt und getrocknet, daß am Ende des Trockentunnels nur noch das Keramikpulver mit dem Polymer sowie den gegebenenfalls zugesetzten Hilfsstoffen verbleibt. Es wird so eine flexible Polymerfolie erhalten, die einen sehr hohen Füllgrad an Keramikpulver aufweist und weiteren Formungsprozessen unterzogen werden kann.

Ein Problem bei den bisher bekannten, keramischen Folien besteht darin, daß die erhaltenen Keramikfolien eine hohe Steifigkeit besitzen und damit hinsichtlich ihrer Verarbeitbarkeit stark eingeschränkt sind. Grünfolien werden bisher nur zur Herstellung ein oder mehrlagiger Körper verwendet

Die Erfindung hat sich die Aufgabe gestellt, ein rationelles Verfahren zur Herstellung eines Körpers aus Porzellan anzugeben. Die Erfindung betrifft weiterhin ein Gemisch zur Verwendung im vorgenannten Verfahren. Unter einer Folie oder Grünfolie wird im Rahmen der nachfolgenden Erläuterungen immer eine noch ungebrannte, noch formbare Folie aus keramischem Werkstoff verstanden.

Nach dem erfindungsgemäßen Verfahren ist es vorgesehen, daß dem aus einer wäßrigen Suspension einer Porzellanmasse bestehenden Gemisch, welches zumindest aus Ton, Feldspat und Quarz enthält, eine wäßrige Dispersion eines Copolymeren auf Basis von Vinylacetat und Ethylen zugesetzt wird, das Gemisch in die Gestalt einer Folie mit einer Dicke von 50 µm bis 3 mm überführt, nachfolgend durch Trocknung vorverfestigt und durch Formgebungsprozesse wie Walzen, Laminieren, Kalandrieren, Schneiden, Stanzen, Papierfaltverfahren und / oder Tiefziehen in die gewünschte Gestalt des Körpers gebracht sowie durch einen keramischen Brennprozeß bleibend verfestigt wird. Hierdurch wird erreicht, daß der fertig geformte Körper vor dem Brennprozeß nicht getrocknet werden muß. Für einen rationellen Arbeitsablauf in der Fertigung ist das von großem Vorteil.

Überraschenderweise wurde gefunden, daß sich die aus dem erfindungsgemäßen Gemisch hergestellten Folien durch rationelle Produktionsverfahren, wie Papierfaltverfahren und / oder Tiefziehen in die Gestalt von keramischen Körpern einer komplizierten Form überführen lassen. Die Formgebung der Körper ist außerdem wesentlich einfacher als bei den bisher zur Anwendung gelangenden Gießverfahren. Es sind weder Gießformen erforderlich noch Trocknungsprozesse im Anschluß an die Formung des Körpers. Hinterschneidungen und geringe Wandstärken können problemlos erzeugt werden. Weiterhin lassen sich die Folien zwischenlagern oder zu Weiterverarbeitern transportieren.

Die Folie kann durch Gießen, Rakeln und / oder Strangpressen erzeugt werden. Sie kann eine gleichmäßige Schichtdicke haben, jedoch auch eine Oberflächenstrukturierung, was die Verwendungsmöglichkeiten verbessert und erweitert.

Desweiteren ist es möglich, die Folie nach ihrer Bildung als Laminat mit anderen Werkstoffen, die einen ähnlichen Ausdehnungskoeffizienten besitzen, zu verbinden.

Die erhaltenen Folien sind riß-, poren- und formbeständig und erleichtern die Verarbeitung zu einem dreidimensionalen Körper.

Die rein auf Wasser basierende Dispersion gestattet ein umweltfreundliches Verfahren zur Herstellung der Folie ohne besondere Aufwendungen für den Trocknungs- und Brennprozeß. Die Verwendung zusätzlicher Dispersionshilfsmittel ist grundsätzlich nicht erforderlich.

Das erfindungsgemäße Gemisch kann jedoch in weiten Bereichen modifiziert werden. So kann die Flexibilität der Folie durch einen Zusatz von bis zu 15 Gew.-% eines polymeren Weichmachers, wie Dibutylphthalat oder Diethylenglykol modifiziert werden, wodurch die Verarbeitbarkeit beim Falten, Prägen und anderen Formgebungsverfahren verbessert werden kann.

Die elektrischen Eigenschaften lassen sich verbessern durch besondere Zusätze, beispielsweise keramischer Oxyde, wie von Wolfram- oder Zirkoniumoxyde. Der Gehalt kann bis zu 10 Gew.-% bei einer mittleren Korngröße von 1 bis 10 µm betragen.

Mit Zusätzen können weitere Eigenschaften, wie z. B. die Flexibilität, modifiziert werden.

Die erhaltenen keramischen Körper können auch in an sich bekannter Weise glasiert oder mit einem Dekor versehen sowie weiteren in der Porzellanindustrie üblichen Verfahren unterzogen werden, so daß wasserdichte, glänzende, farblich gestaltete Produkte erhalten werden.

Das erfindungsgemäße Verfahren gestattet die Herstellung dünnwandiger Formkörper, wobei das Aussehen und insbesondere die Opazität der Oberfläche durch Prägen noch verbessert und insbesondere mit einem Muster versehen werden kann.

Eine weitere Aufgabe wird darin gesehen, ein Gemisch zur Herstellung einer Folie aufzuzeigen, die sich besonders gut für das Verfahren nach Anspruch 1 eignet. Hierzu wird die Anwendung eines Gemischs mit den Merkmalen gemäß Anspruch 4 vorgeschlagen. Weitere vorteilhafte Ausgestaltungen der Zusammensetzung des Gemisches sind in den Ansprüchen 5 bis 10 beschrieben.

Grundsätzlich hat das zur Herstellung der Folie verwendete Gemisch eine Zusammensetzung, die 30 bis 70 Gew.-% Ton, 15 bis 70 Gew.-% Feldspat, 10 bis 40 Gew.-% Quarz und 3 bis 30 Gew.-% einer wäßrigen Dispersion eines Copolymers auf der Basis von Vinylacetat und Ethylen sowie gegebenenfalls weitere Zusätze enthält. Es ist kostengünstig verfügbar.

Weitere Eigenschaften, insbesondere die elektrischen, thermischen und mechanischen Eigenschaften lassen sich durch einen Gehalt von bis zu 10 Gew.-% eines keramischen Oxyds mit einer mittleren Korngröße von 1 bis 10 µm erzielen.

Die Einstellung der für die Herstellung der Folie aus der Masse erforderlichen Viskosität erfolgt zweckmäßig durch einen Zusatz von max. 8 Gew.-% eines Verflüssigers, beispielsweise eines Verflüssigers auf Basis einer wäßrigen Natriumkarbonatlösung.

Durch einen Gehalt eines Porenbildners in Form von extrahierbaren Salzen beziehungsweise beim Brennprozeß flüchtigen Substanzen wie Karbonaten oder organischen Substanzen lassen sich definierte poröse Strukturen im Fertigteil erzeugen, wie sie beispielsweise für Filter notwendig sind. Insbesondere sind solche Körper als Rußfilter in Verbindung mit Dieselmotoren geeignet.

Eine besonders vorteilhafte Zusammensetzung, die sich ausgezeichnet verarbeiten läßt, umfaßt zweckmäßig 5 bis 25 Gew.-% einer wäßrigen Dispersion eines Copolymeren auf der Basis von Vinylacetat und Ethylen, 3 bis 6 Gew.-% eines Verflüssigers auf der Basis einer wäßrigen Natriumkarbonatlösung und bis zu 10 Gew.-% eines keramischen Oxyds.

Die Erfindung wird nachfolgend anhand von zwei Ausführungsbeispielen näher erläutert:

### Beispiel 1:

Einem Porzellanschlicker mit 73 Gew.-% Feststoff in der wäßrigen Dispersion werden, bezogen auf den Feststoffgehalt im Porzellanschlicker, 12 Gew.-% einer 55 Gew.-%igen Bindemitteldispersion auf Basis von Vinylacetat und Ethlyen und 3,8 Gew.-% bezogen auf das Bindemittel einer 10 Gew.-%igen Natriumcarbonatlösung als Verflüssiger zugesetzt. Die Substanzen werden intensiv vermischt und durch einen Spaltgießprozeß zu einer Folie geformt. Die nach dem Trockenprozeß erhaltene Folie weist keine Risse, keine Delaminierung, eine glatte Oberfläche und eine gute Flexibilität auf. Die Folie läßt sich in einem Tiefziehverfahren verarbeiten und weist nach einem Brennprozeß bei ca. 1500°C ein Schwindung von ca. 14,5 % auf.

### Beispiel 2:

Einem Porzellanschlicker gemäß Beispiel 1 werden in Bezug auf den Feststoffgehalt im Porzellanschlicker 13 Gew.-% des in Beispiel 1 verwendeten Bindemittels zugesetzt. Der Gehalt an Verflüssiger in Bezug auf das Bindemittel beträgt 5 Gew.-%. Die erhaltene keramische Masse weist eine für ein Gießverfahren günstige Viskosität auf. Die nach dem Trocknungsprozeß erhaltene Grünfolie ist frei von Rissen, zeigt keine Delamination, besitzt eine glatte Oberfläche und weist eine für die Weiterverarbeitung durch ein Papierfaltverfahren geeignete Flexibilität auf.

## Patentansprüche

1. Verfahren zur Herstellung eines Körpers aus Porzellan, bei dem ein Gemisch zumindest aus Ton, Feldspat und Quarz in die Gestalt einer wäßrigen Masse überführt, anschließend fertig geformt und durch einen Brennprozeß bleibend verfestigt wird, **dadurch gekennzeichnet, daß** dem Gemisch eine wäßrige Dispersion eines Copolymeren auf Basis von Vinylacetat und Ethylen zugesetzt wird, das Gemisch in die Gestalt einer Folie mit einer Dicke von 50 µm bis 3 mm überführt, nachfolgend durch Trocknung vorverfestigt und durch Formgebungsprozesse wie Walzen, Laminieren, Kalandrieren, Schneiden, Stanzen, Papierfaltverfahren und / oder Tiefziehen in die gewünschte Gestalt des Körpers gebracht sowie durch einen keramischen Brennprozeß bleibend verfestigt wird.

2. Verfahren nach Anspruch 1, **dadurch gekennzeichnet, daß** die Folie durch Gießen, Rakeln und / oder Strangpressen erzeugt wird.

3. Verfahren nach Anspruch 1 oder 2, **dadurch gekennzeichnet, daß** die Folie nach ihrer Bildung mit anderen Werkstoffen, die einen ähnlichen Ausdehnungskoeffizienten besitzen, z. B. Glas oder Keramik aufgebracht und verfestigt sowie zugleich mit dem Träger verbunden wird.

4. Gemisch zur Verwendung bei dem Verfahren nach einem der Ansprüche 1 bis 3, **dadurch gekennzeichnet, daß** darin 30 bis 70 Gew.-% Ton, 15 bis 70 Gew.-% Feldspat, 10 bis 40 Gew.-% Quarz und 3 bis 30 Gew.-% einer wäßrigen Dispersion eines Copolymers auf der Basis von Vinylacetat und Ethylen sowie gegebenenfalls weitere Zusätze enthalten sind.

5. Gemisch nach Anspruch 4, **dadurch gekennzeichnet, daß** darin bis zu 15 Gew.-% eines polymeren Weichmachers wie Dibutylphthalat oder Diethylenglykol enthalten sein können.

6. Gemisch nach Anspruch 4 oder 5, **dadurch gekennzeichnet, daß** darin bis zu 10 Gew.-% eines keramischen Oxyds mit einer mittleren Korngröße von 1 bis 10 µm enthalten sind.

7. Gemisch nach einem der Ansprüche 4 bis 6, **dadurch gekennzeichnet, daß** darin bis 8 Gew.-% eines Verflüssigers enthalten sind.

8. Gemisch nach Anspruch 7, **dadurch gekennzeichnet, daß** darin ein Verflüssiger auf der Basis einer wäßrigen Natriumkarbonatlösung enthalten ist.

9. Gemisch nach einem der Ansprüche 4 bis 8, **dadurch gekennzeichnet, daß** darin ein Porenbildner in Form von extrahierbaren Salzen beziehungsweise beim Brennprozeß flüchtige Substanzen wie Karbonate oder organische Substanzen enthalten sind.

10. Gemisch nach einem der Ansprüche 4 oder 9, **dadurch gekennzeichnet, daß** darin 5 bis 25 Gew.-% einer wäßrigen Dispersion eines Copolymeren auf der Basis von Vinylacetat und Ethylen, 3 bis 6 Gew.-% eines Verflüssigers auf der Basis einer wäßrigen Natriumkarbonatlösung und bis zu 10 Gew.-% eines keramischen Oxyds enthalten sind.

## Claims

1. A method of manufacturing an article composed of porcelain wherein a mixture at least of clay, feldspar and quartz is transformed into an aqueous mass, then ready-shaped and permanently consolidated by a firing operation, **characterized in that** the mixture has added to it an aqueous dispersion of a copolymer based on vinyl acetate and ethylene, the mixture is transformed into a sheet from 50 µm to 3 mm in thickness, then preconsolidated by drying and formed by shape-conferring operations such as rolling, laminating, calendering, cutting, punching, paper folding and/or deep drawing into the desired shape of the article and permanently consolidated by a ceramic firing operation.

2. A method according to claim 1, **characterized in that** the sheet is created by casting, knife coating and/or extrusion.

3. A method according to claim 1 or 2, **characterized in that** the sheet after its formation is applied with other construction materials which have a similar expansion coefficient, for example glass or ceramic, and consolidated and also at the same time bonded to the support.

4. A mixture for use in the method according to any one of claims 1 to 3, **characterized in that** it includes from 30% to 70% by weight of clay, from 15% to 70% by weight of feldspar, from 10% to 40% by weight of quartz, and from 3% to 30% by weight of an aqueous dispersion of a copolymer based on vinyl acetate and ethylene and optionally further additives.

5. A mixture according to claim 4, **characterized in that** it may include up to 15% by weight of a polymeric plasticizer such as dibutyl phthalate or diethylene glycol.

6. A mixture according to claim 4 or 5, **characterized in that** it includes up to 10% by weight of a ceramic oxide having an average particle size in the range from 1 to 10 µm.

7. A mixture according to any one of claims 4 to 6, **characterized in that** it includes up to 8% by weight of a superplasticizer.

8. A mixture according to claim 8, **characterized in that** it includes a superplasticizer based on an aqueous sodium carbonate solution.

9. A mixture according to any one of claims 4 to 8, **characterized in that** it includes a pore-former in the form of extractable salts or in the form of substances, such as carbonates or organic substances, that are volatile during the firing operation.

10. A mixture according to either of claims 4 and 9, **characterized in that** it includes from 5% to 25% by weight of an aqueous dispersion of a copolymer based on vinyl acetate and ethylene, from 3% to 6% by weight of a superplasticizer based on an aqueous sodium carbonate solution and up to 10% by weight of a ceramic oxide.

## Revendications

1. Procédé de fabrication d'un objet en porcelaine, dans lequel un mélange constitué au moins d'argile, de feldspath et de quartz est transformé en une pâte aqueuse, est ensuite moulé et est solidifié de manière durable par une opération de cuisson, **caractérisé en ce qu'**une dispersion aqueuse d'un copolymère à base d'acétate de vinyle et d'éthylène est ajouté au mélange, le mélange est transformé en une feuille d'une épaisseur de 50 µm à 3 mm, est ensuite présolidifié par séchage et est amené sous la forme souhaitée pour l'objet par des opérations de façonnage telles que laminage, calandrage, découpe, estampage, pliage et/ou emboutissage pour être ensuite solidifié de manière durable par un procédé de cuisson céramique.

2. Procédé selon la revendication 1, **caractérisé en ce que** la feuille est créée par coulée, raclage et/ou extrusion.

3. Procédé selon les revendications 1 ou 2, **caractérisé en ce que** d'autres matériaux qui possèdent un coefficient de dilatation similaire, par exemple du verre ou de la céramique, sont appliqués sur la feuille après sa formation et sont solidifiés et en même temps reliés au support.

4. Mélange destiné à être utilisé dans le procédé selon l'une des revendications 1 à 3, **caractérisé en ce qu'**il contient de 30 à 70 % en poids d'argile, de 15 à 70 % en poids de feldspath, de 10 à 40 % en poids de quartz et de 3 à 30 % en poids d'une dispersion aqueuse d'un copolymère à base d'acétate de vinyle et d'éthylène, ainsi que d'éventuels autres additifs.

5. Mélange selon la revendication 4, **caractérisé en ce qu'**il peut contenir jusque 15 % en poids d'un plastifiant polymère tel que le phtalate de dibutyle ou le diéthylèneglycol.

6. Mélange selon les revendications 4 ou 5, **caractérisé en ce qu'**il contient jusque 10 % en poids d'un oxyde céramique dont les grains ont une taille moyenne de 1 à 10 µm.

7. Mélange selon l'une des revendications 4 à 6, **caractérisé en ce que** qu'il contient jusque 8 % en poids d'un fluidifiant.

8. Mélange selon la revendication 8, **caractérisé en ce qu'**il contient un fluidifiant à base d'une solution aqueuse de carbonate de sodium.

9. Mélange selon l'une des revendications 4 à 8, **caractérisé en ce qu'**il contient un agent de formation de pores qui présente la forme de sels extractibles ou de substances qui se volatilisent lors de l'opération de cuisson, par exemple des carbonates ou des substances organiques.

10. Mélange selon l'une des revendications 4 ou 9, **caractérisé en ce qu'**il contient de 5 à 25 % en poids d'une dispersion aqueuse d'un copolymère à base d'acétate de vinyle et d'éthylène, de 3 à 6 % en poids d'un fluidifiant à base d'une solution aqueuse de carbonate de sodium et jusque 10 % d'un oxyde céramique.
